Europäisches Patentamt

European Patent Office

Office européen des brevets

(19)

(11) Numéro de publication: **0 358 546**
**A1**

## (12) DEMANDE DE BREVET EUROPEEN

(21) Numéro de dépôt: 89402273.0

(22) Date de dépôt: **11.08.89**

(51) Int. Cl.⁵: **B 62 B 9/08**

(30) Priorité: **29.08.88 FR 8811338**

(43) Date de publication de la demande:
**14.03.90 Bulletin 90/11**

(84) Etats contractants désignés:
**AT BE CH DE ES FR GB GR IT LI LU NL SE**

(71) Demandeur: **AMPAFRANCE**
**119, Rue de Paris**
**F-92107 Boulogne-Billancourt Cedex (FR)**

(72) Inventeur: **Bigo, Jean**
**74, rue Maindron**
**F-49300 Cholet (FR)**

(74) Mandataire: **Casalonga, Axel et al**
**BUREAU D.A. CASALONGA - JOSSE Morassistrasse 8**
**D-8000 München 5 (DE)**

(54) Dispositif de blocage de roue, en particulier pour voiture d'enfant.

(57) Dispositif de blocage de roues, en particulier pour voiture d'enfant, comportant au moins un bloc-roue (4) et un organe de blocage de roue capable d'être déplacé sensiblement parallèlement à l'essieu de la roue et d'entrer en contact avec la jante de la roue pour bloquer sa rotation, caractérisé par le fait que le bloc-roue (4) est relié au châssis de la voiture par l'intermédiaire d'une manchon vertical de liaison (12) et que l'organe de blocage comprend un doigt mobile (14a,14b) actionné par un arbre de commande (15) mobile verticalement à l'intérieur du manchon de liaison.

Une action unique sur la tringle flexible 18 provoque ainsi le blocage en rotation simultané des deux blocs-roues pivotants de la poutre-essieu 3.

Dans un mode de réalisation, les mêmes blocs-roues peuvent être bloqués en direction fixe par les pièces de blocage (32,33) coopérant avec les encoches (30) du manchon de liaison (12).

FIG.2

**Description**

### Dispositif de blocage de roue, en particulier pour voiture d'enfant

La présente invention est relative à un dispositif de blocage de roue, pouvant être utilisé en particulier pour des voitures d'enfants, capable de bloquer simultanément la rotation de plusieurs roues. Dans le cas de roues directionnelles, le dispositif de l'invention permet en outre de bloquer le pivotement des roues par des moyens supplémentaires.

On connaît déjà des dispositifs de blocage ou de freinage de roues dans lesquels on provoque le déplacement axial ou radial d'un élément de blocage qui vient s'insérer entre deux rayons de la roue ou agit sur son moyeu. On peut citer, par exemple, le brevet français 8412509 (AMPAFRANCE), le brevet US-A-4.116.464, la demande de brevet allemand DE-2.351.435 (MULLER) ou la demande de brevet européen EP-64.368 (KIRK-DYSON). Dans d'autres dispositifs de freinage de type connu, on agit radialement sur le bandage de la roue en utilisant la souplesse de ce bandage, comme décrit, par exemple, dans le brevet français 8502374 (AMPAFRANCE).

Dans tous ces dispositifs de blocage ou de freinage, il n'est possible d'agir simultanément sur les deux roues ou les deux ensembles de roues d'un même essieu que si ces roues ne sont pas orientables. Dans le cas où l'on prévoit, pour une poussette d'enfant, des roues orientables à l'avant, le dispositif de freinage est alors habituellement disposé sur les deux roues non orientables liées à l'essieu arrière.

On connaît également des dispositifs de freinage destinés à agir sur un bloc-roue directionnel capable de pivoter autour d'un axe vertical. Dans ces dispositifs, cependant, les moyens de blocage sont conçus de manière individuelle pour chaque roue ou chaque bloc-roue, de sorte qu'il est nécessaire d'agir sur deux moyens de commande pour bloquer complètement le pivotement des roues directionnelles de la poussette ou de la voiture d'enfant.

La présente invention a pour objet un dispositif de blocage de roues qui puisse agir simultanément sur les deux roues directionnelles ou sur les deux blocs-roues directionnels orientables d'un même essieu au moyens d'un seule commande.

L'invention a également pour objet un dispositif de blocage de roues qui puisse aisément être monté au voisinage de l'un ou l'autre des essieux d'une voiture d'enfant, de façon à permettre une action de blocage sur l'essieu avant ou sur l'essieu arrière ou sur les deux essieux en montant deux dispositifs de blocage selon l'invention, ce qui permet ainsi d'augmenter la souplesse d'utilisation de la voiture d'enfant.

L'invention a encore pour objet de prévoir un dispositif de blocage en direction capable d'agir sur deux blocs-roues directionnels d'un même essieu, ce dispositif pouvant être associé au dispositif de blocage de roues selon l'invention, sur le même essieu, de façon à permettre, par deux commandes proches l'une de l'autre, non seulement de bloquer les roues dans leur rotation qui permet l'avancement de la poussette, mais également de bloquer leur pivotement autour de l'axe vertical solidaire du châssis de la poussette, afin de les remettre dans la direction fixe prédéterminée normale.

Le dispositif de blocage de roues, en particulier pour voiture d'enfant, selon l'invention, comporte au moins un bloc-roue et un organe de blocage de roue capable d'être déplacé sensiblement parallèlement à l'essieu de la roue, et d'entrer en contact avec la jante de la roue pour bloquer sa rotation. Selon l'invention, le bloc-roue est relié au châssis de la voiture par l'intermédiaire d'un manchon vertical de liaison. L'organe de blocage comprend un doigt mobile actionné par un arbre de commande mobile verticalement à l'intérieur du manchon de liaison.

Dans le cas où la voiture d'enfant comprend au moins deux blocs-roues reliés par un élément de châssis sensiblement transversal, les arbres de commande respectifs de chaque bloc-roue sont actionnés simultanément par une tringle de commande sensiblement parallèle à l'élément de châssis transversal.

Dans un mode de réalisation avantageux de l'invention, le manchon vertical de liaison de chaque bloc-roue supporte, en outre, un moyen élastique de suspension de l'essieu de roue. De cette manière, il est possible de réaliser un ensemble compact au moyen d'un nombre réduit de pièces qui assure à la fois la suspension et le blocage des roues.

Dans un mode de réalisation préféré où chacun des blocs-roues comporte deux roues montées de part et d'autre du manchon vertical de liaison, l'organe de blocage comprend deux doigts mobiles actionnés simultanément par l'arbre de commande. Les deux roues du bloc-roue sont ainsi bloquées simultanément.

Dans un mode de réalisation avantageux, l'extrémité inférieure de l'arbre de commande présente au moins une surface de came exerçant un effet d'écartement sur le ou les doigts de blocage à l'encontre d'un moyen de rappel élastique. La tringle de commande peut être une lame flexible qui peut être montée, par exemple, à l'intérieur même de l'élément de châssis transversal qui présente l'aspect d'une poutre. La lame flexible peut être déformée au voisinage de sa partie centrale par une pédale de commande, de façon à provoquer un déplacement simultané de ses deux extrémités vers le haut, agissant ainsi sur les arbres de commande respectifs des deux blocs-roues simultanément. De cette manière, lors d'une action de blocage, les deux arbres de commande sont déplacés vers le haut et leurs surfaces de came en forme de rampe inclinée sont capables d'écarter les extrémités de deux branches élastiques flexibles portant les doigts de blocage. Une action unique sur la pédale de commande entraînant la déformation de la lame flexible, provoque ainsi, simultanément, l'action de blocage sur les deux blocs-roues, et ce, quelle que soit leur orientation lorsqu'il s'agit de blocs-roues pivotants directionnels.

Dans les cas où les blocs-roues sont du type directionnel et peuvent pivoter librement par rapport au châssis de la voiture, chaque bloc-roue est monté en vue de son mouvement de pivot autour de l'axe du manchon vertical de liaison.

Dans ce cas, le manchon vertical de liaison présente, dans sa partie supérieure, au moins une encoche capable de coopérer avec une pièce de blocage en rotation, dont le déplacement est commandé par la flexion d'une deuxième tringle de commande. Une action au moyen d'une pédale appropriée sur cette deuxième tringle de commande provoque donc le déplacement des pièces de blocage. Lorsque le manchon vertical de liaison du bloc-roue directionnel, qui subit une rotation du fait du déplacement de la voiture d'enfant, vient dans une position angulaire dans laquelle l'encoche qu'il porte peut coopérer avec la pièce de blocage, le bloc-roue se trouve immobilisé en position.

L'action de commande unique sur la pédale permet donc, très rapidement, de maintenir dans une direction prédéterminée, les deux blocs-roues directionnels.

L'invention sera mieux comprise à l'étude de quelques modes de réalisation décrits à titre d'exemples nullement limitatifs et illustrés par les dessins, sur lesquels :

la figure 1 est une vue en perspective schématique d'une poussette équipée d'un dispositif de blocage, selon l'invention;

la figure 2 est une vue en coupe d'un essieu de la poussette de la figure 1, montrant, dans deux positions particulières de chaque bloc-roue, les différents organes du dispositif de l'invention;

la figure 3 est une vue de dessus en coupe selon III-III de la figure2;

la figure 4 est une vue en coupe transversale selon IV-IV de la figure 3, illustrant la structure de la pédale de commande du dispositif de blocage de l'invention; et

la figure 5 est une vue en coupe partielle, analogue à la figure 2, d'une variante de réalisation.

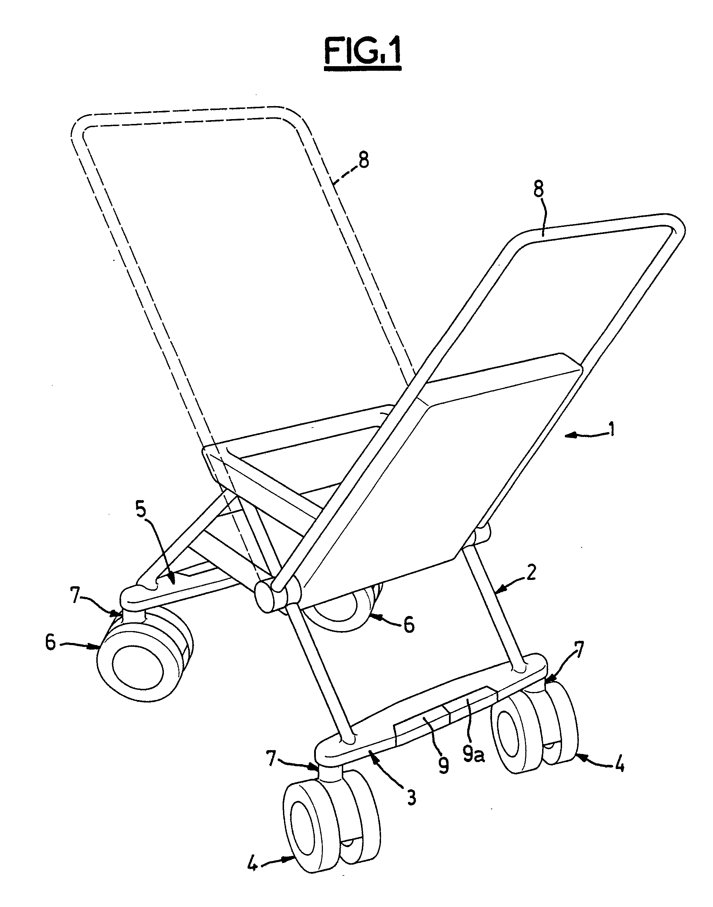

Comme illustré sur la figure 1, le dispositif de l'invention peut être adapté à une voiture d'enfant ou une poussette. Bien entendu, il ne s'agit là que d'un exemple et l'invention pourrait s'appliquer à d'autres véhicules, tels que chariots, fauteuils roulants, etc. Sur la figure, la poussette, référencée 1 dans son ensemble, présente un châssis tubulaire muni d'une poutre formant essieu arrière 3, supportant deux blocs-roues arrières 4 et une poutre formant essieu avant 5, supportant deux-blocs roues avant 6. Chacun des quatre blocs-roues 4,6 peut, dans l'exemple illustré, pivoter librement autour d'un axe vertical de pivot qui est constitué ici par une pièce unique 7 qui forme à la fois le pivot et la suspension de la poussette, comme on le verra plus loin. Bien entendu, il se pourrait que certains des blocs-roues soient fixes en direction, le dispositif de blocage de l'invention pouvant également s'appliquer dans ce cas.

Comme on peut le voir sur la figure 1, la poussette comprend également un guidon 8 qui peut être placé dans la position illustrée en traits pleins, dans laquelle l'enfant se trouvant sur la poussette est assis le dos tourné vers la personne qui le pousse ou dans une autre position illustrée en pointillés sur la figure, dans laquelle l'enfant est au contraire assis face à la personne qui le pousse. Des moyens de blocage, non illustrés, sont prévus pour maintenir le guidon 8 dans chacune de ces deux positions. On notera que les blocs-roues 4,6 sont dont alternativement et selon la position du guidon 8, à l'arrière ou à l'avant.

Le blocage en rotation des roues 4 est obtenu par une simple action de poussée sur la pédale 9 se trouvant sur la poutre-essieu arrière 3. Pour maintenir les blocs-roues 4 fixes en direction, on agit au contraire sur la pédale 9a qui est placée à côté de la pédale 9. Des pédales de commande identiques sont prévues sur la poutre-essieu avant 5.

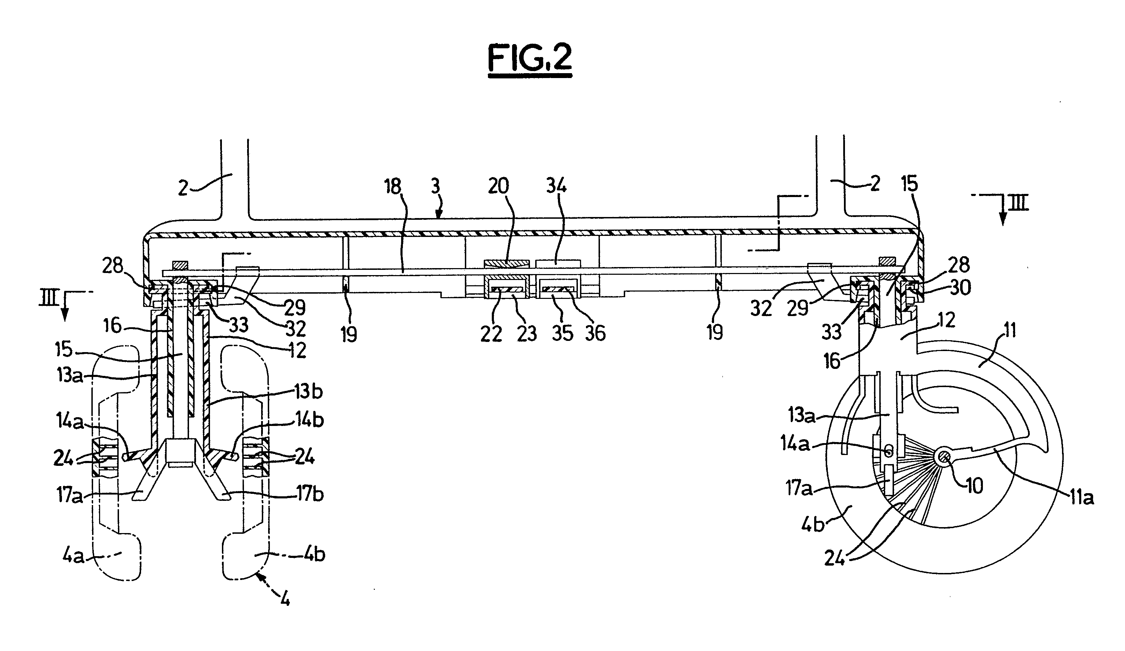

En se reportant aux figures 2, 3 et 4, on va maintenant décrire la structure et le fonctionnement du dispositif de blocage de roues de l'invention. La description sera faite en se fondant sur le dispositif qui équipe la poutre-essieu arrière 3, munie des deux blocs-roues arrière 4. On comprendra, bien entendu, que la structure et le fonctionnement du dispositif de blocage des blocs-roues avant 6 sont les mêmes.

Le bloc-roue 4 comprend deux roues 4a,4b montées sur un axe horizontal commun 10, qui peut tourner dans un alésage de bras radial 11a solidaire d'une lame flexible semi-circulaire 11 d'un manchon vertical de liaison 12, de structure tubulaire. La lame flexible 11 et le bras 11a, réalisés par exemple en matière plastique moulée, constituent la suspension souple de la poussette. Le manchon 12 présente sur ses faces externes en regard des roues respectives 4a,4b, deux languettes flexibles 13a,13b diamétralement opposées. Chaque languette 13a,13b présente à son extrémité un doigt de blocage 14a,14b sensiblement parallèle à l'axe 10. Un arbre de commande 15 est monté en vue d'un déplacement vertical de va-et-vient à l'intérieur d'une douille de guidage 16, solidaire de la structure de la poutre-essieu 3. A l'extrémité inférieure de l'arbre de commande 15 se trouvent fixées deux rampes inclinées 17a,17b jouant le rôle de surfaces de came et coopérant avec les extrémités libres des deux languettes 13a,13b.

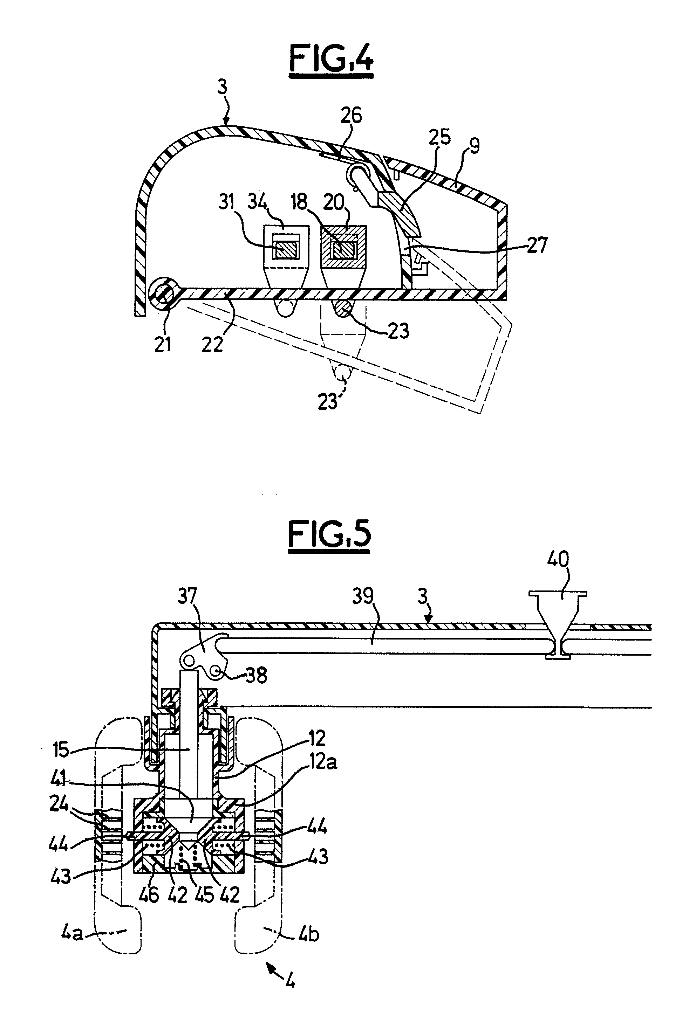

Une tringle de commande flexible 18 s'étend sur toute la longueur de la poutre-essieu 3 et pénètre à ses deux extrémités libres dans une perforation pratiquée a l'extrémité supérieure de chacun des arbres de commande 15. La tringle 18 prend appui, en outre, sur deux nervures d'appui 19 de la poutre-essieu 3, sensiblement à égale distance entre la zone médiane de la tringle 18 et ses deux extrémités. Un étrier 20 enserre la tringle 18 au voisinage de sa région médiane. Comme on peut la voir, en particulier, sur la figure 4, la pédale de commande 9 peut pivoter autour d'un axe 21 solidaire de la poutre-essieu 3. La face inférieure 22 de la pédale 9 est en contact avec un axe 23 solidaire de l'étrier 20.

Le dispositif de blocage de l'invention fonctionne de la manière suivante. Une action de poussée, par exemple avec le pied, sur la pédale 9 pour la déplacer de la position en traits pleins, illustrée sur la figure 4, jusqu'à la position en pointillés, provoque le déplacement vers le bas de l'axe 23 et une poussée vers le bas, par l'intermédiaire de l'étrier 20, de la partie centrale de la tringle de commande flexible 18. La tringle de commande 18 fléchit entre les deux nervures d'appui 19, de sorte que ses deux extrémités se trouvent soulevées vers le haut, entraînant ainsi, simultanément dans ce mouvement, les deux arbres de commande 15. Les deux arbres de commande 15 se déplacent verticalement vers le haut en étant guidés à l'intérieur de la douille de guidage 16 et provoquent, par l'action des cames 17a,17b également entraînées vers le haut, l'écartement simultané des doigts de blocage mobiles 14a,14b qui viennent s'intercaler entre deux rayons 24 des roues 4a,4b, entraînant ainsi le blocage de la rotation de ces dernières.

Le dispositif est maintenu en position de blocage par l'encliquetage dans cette position de la pédale 9, au moyen de l'ergot d'encliquetage 25 (figure 4) qui peut pivoter autour d'un axe à l'encontre du ressort de rappel 26. Comme on le voit sur la figure 4, le mouvement vers le bas de la pédale 9 fait s'effacer l'ergot d'encliquetage 25 dans un logement 27 pratiqué dans la surface extérieure de la poutre-essieu 3, puis après dépassement, l'ergot 25 revient dans sa position illustrée sur la figure 4, en bloquant la pédale 9 dans sa position illustrée en pointillés.

Dans cette position où la tringle de commande 18 est toujours fléchie, on comprend que le dispositif de blocage des roues est actif, empêchant toute rotation de des dernières. Par contre, le pivotement des blocs-roues 4 autour de leur axe vertical, c'est-à-dire la rotation des manchons de liaison 12, par rapport à la poutre-essieu 3, reste toujours possible.

Une action de poussée, par exemple avec le pied, sur l'ergot d'encliquetage 25 libère la pédale 9 qui revient automatiquement en position par l'élasticité de la tringle de commande 18, laquelle reprend sa position non fléchie illustrée sur la figure 2, dans laquelle les doigts de blocage mobiles 14a,14b sont revenus en direction de l'arbre 15 où ils n'interfèrent pas avec les rayons 24 des roues 4a,4b.

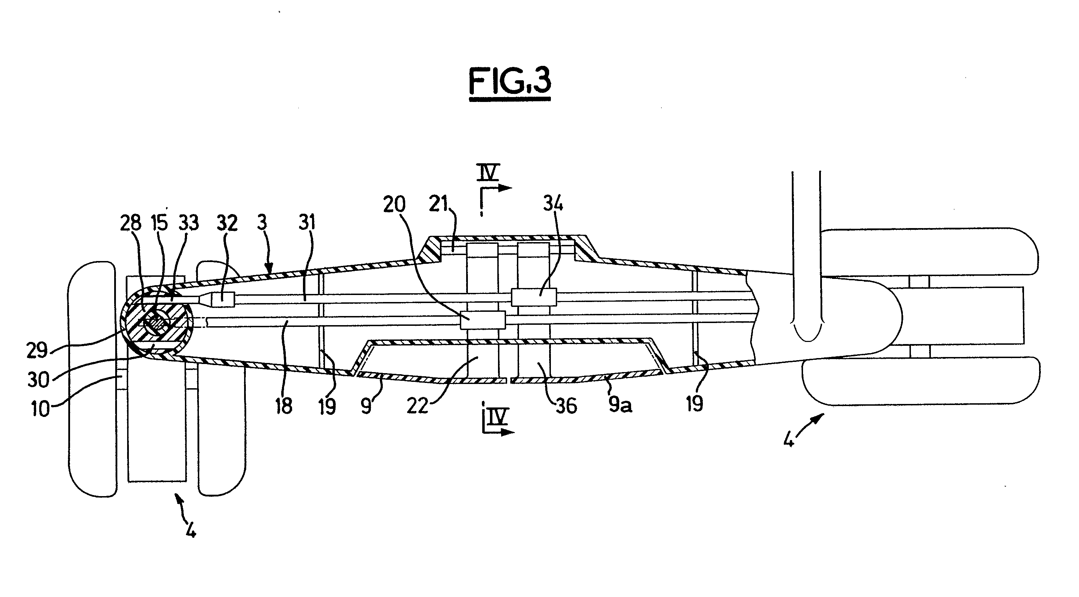

Dans le mode de réalisation illustré sur les figures, la poutre-essieu arrière 3 comporte, en outre, bien que cela ne soit pas indispensable dans tous les cas, des moyens permettant de maintenir en direction fixe les deux blocs-roues 4 qui sont normalement pivotants, comme on l'a vu précédemment. A cet effet, la partie supérieure du manchon de liaison 12 comporte une collerette 28 à sa partie supérieure. La collerette 28 peut tourner à l'intérieur d'un logement 29 solidaire de la structure de la poutre-essieu 3, assurant ainsi le pivotement des roues 4 autour de l'axe vertical du manchon de liaison 12. La face inférieure de la collerette 28 comporte deux encoches parallèles 30 visibles sur les figures 2 et 3. Une deuxième tringle de commande flexible 31 est montée à l'intérieur de la poutre-essieu 3, parallèlement à la tringle 18. Au voisinage de ces deux extrémités, la tringle de commande 31 présente deux pièces de blocage en rotation 32 qui sont solidaires de la tringle 31 et dont une branche allongée 33 peut traverser un passage du logement circulaire 29 et coopérer avec l'une des encoches 30.

Comme on peut le voir sur la figure 3, la tringle de commande 31 avec sa pièce de blocage en rotation 32, est décalée par rapport à la tringle 18 qui coopère avec les deux arbres de commande 15, de façon que les branches 33 puissent pénétrer dans l'une des nervures 30. Dans cette position qui est illustrée sur la figure 3, toute rotation du manchon de liaison 12 est empêchée par la branche 33 de la pièce de blocage 32 qui coopère avec l'un des encoches 30 de la collerette 28. Le bloc-roue 4 se trouvant sur la gauche de la figure 3 est bloqué dans la direction perpendiculaire à la poutre-essieu 3, du fait que les encoches 30 sont parallèles à l'axe 10 du bloc-roue 4.

L'actionnement de la tige de commande 31 se fait comme pour la tige de command 18. A cet effet, la tige 32 prend également appui sur les deux nervures 19 et elle peut être actionnée par un étrier 34 dont la structure est identique à celle de l'étrier 20 et qui comporte comme ce dernier un axe 35 qui coopère avec la face inférieure 36 de la pédale 9a.

Dans ces conditions, lorsque l'on souhaite remettre les deux blocs-roues dans la position prédéterminée, perpendiculaire à la poutre-essieu 3, comme illustré sur la gauche de la figure 3, on appuie avec le pied sur la pédale 9a qui reste bloquée par un moyen non illustré, identique à celui qui est illustré sur la figure 4, pour la pédale 9. L'action d'appui dans la zone centrale de la tige de commande flexible 31 au moyen de l'étrier 34, provoque une flexion au contact des deux nervures d'appui 19, qui soulève les deux extrémités de la tige 31 ainsi que les pièces de blocage en rotation 32 qui lui sont solidaires. Les branches allongées 33 viennent en contact avec la face inférieure de la collerette 28 et frottent élastiquement contre cette face jusqu'à ce que la rotation du bloc-roue 4 ait amené l'une des nervures 30 en face de la branche 33 de la pièce de blocage en rotation 32 qui pénètre alors dans ladite nervure en maintenant le bloc-roue 4 dans la position illustrée sur la gauche de la figure 3.

La position illustrée sur la droite de la figure 3 pour le bloc-roue 4 de droite est donc une position provisoire, ledit bloc-roue devant être remis parallèlement au bloc-roue de gauche dès que la pièce de blocage en rotation 32 se trouvant à droite sur la figure 3, aura pénétré dans la gorge 30 du manchon de liaison 12 correspondant. Une seule action sur la pédale 9a permet donc, très rapidement, de remettre les deux blocs-roues 4 dans la direction prédéterminée et de les bloquer dans cette direction fixe. Le relâchement de la pédale 9a libère au contraire les deux blocs-roues.

La figure 5 illustre une variante de l'invention, dans laquelle les pièces analogues portent les même références. Dans cette variante, on retrouve un bloc-roue 4 monté sur un manchon de liaison vertical 12. A l'intérieur du manchon 12 peut se déplacer verticalement l'arbre de commande 15. Ce déplacement est provoqué par un levier 37 pouvant pivoter autour d'un axe fixe 38 sous l'action d'une barre de commande 39 qui peut être déplacée vers l'extérieur (vers la gauche sur la figure 5) lorsqu'une pièce formant came 40 est appuyée à l'intérieur de la poutre-essieu 3.

L'arbre de commande 15 présente, dans sa partie basse, une tête conique 41 qui joue le rôle de surface de came pour deux pistons 42 de surface extérieure conique rappelés par des ressorts hélicoïdaux 43 et présentant des tiges 44 qui peuvent faire saillie à l'extérieur de la portion inférieure 12a du manchon de liaison 12 jusqu'à se trouver entre deux rayons 24 des roues 4a et 4b, réalisant ainsi le blocage en rotation des roues.

Dans l'exemple illustré, bien que cela ne soit pas indispensable dans tous les cas, un ressort de rappel 45 est en outre monté entre la paroi inférieure 46 du manchon de liaison 12 et l'extrémité inférieure de l'arbre de commande 15, de façon à rappeler vers le haut l'arbre de commande 15 pour faciliter le dégagement des tiges de blocage 44.

Dans ce mode de réalisation, tel qu'illustré sur la figure 5, on n'a pas représenté de dispositif de maintien en direction des blocs-roues. On comprendra, cependant, qu'un dispositif analogue à celui qui a été décrit pour le mode de réalisation illustré sur les figures 2 et 3, pourrait être utilisé pour obtenir le même résultat.

Le dispositif de l'invention permet ainsi, d'une manière simple et avec une commande unique, d'entraîner un blocage efficace et simple sur les deux roues ou les deux blocs-roues, éventuellement pivotants, montés sur un seul essieu d'une poussette ou d'une voiture d'enfant ou de tout autre véhicule léger pour lequel se pose le même problème de blocage de roues.

Dans la présente description, on a mentionné à plusieurs reprises l'existence de blocs-roues, c'est-à-dire d'ensembles présentant deux roues disposées côte à côte. On comprendra que l'invention s'applique sans modification substantielle au cas où ces blocs-roues sont remplacés par des roues individuelles.

## Revendications

1. Dispositif de blocage de roues, en particulier pour voiture d'enfant, comportant au moins un bloc-roue (4) et un organe de blocage de roue capable d'être déplacé sensiblement parallèlement à l'essieu de la roue et d'entrer en contact avec la jante de la roue pour bloquer sa rotation, caractérisé par le fait que le bloc-roue (4) est relié au châssis de la voiture par l'intermédiaire d'une manchon vertical de liaison (12) et que l'orange de blocage comprend un doigt mobile (14a,14b) actionné par un arbre de commande (15) mobile verticalement à l'intérieur du manchon de liaison.

2. Dispositif de blocage de roues, selon la revendication 1, pour une voiture d'enfant comportant au moins un bloc-roue relié par un élément de châssis sensiblement transversal, caractérisé par le fait que les arbres de commande respectifs de chaque bloc-roue sont actionnés simultanément par une tringle de commande (18) sensiblement parallèle à l'élément de châssis transversal.

3. Dispositif de blocage de roues selon les revendications 1 ou 2, caractérisé par le fait que le manchon vertical de liaison supporte, en outre, un moyen élastique de suspension (11,11a) de l'essieu de roues.

4. Dispositif de blocage de roues selon l'une quelconque des revendications 1 à 3, caractérisé par le fait que chacun des blocs-roues précités comporte deux roues montées de part et d'autre du manchon vertical de liaison.

5. Dispositif de blocage de roues selon la revendication 4, caractérisé par le fait que l'organe de blocage comprend deux doigts mobiles actionnés simultanément par l'arbre de commande.

6. Dispositif de blocage de roues selon l'une quelconque des revendications précédentes, caractérisé par le fait que l'extrémité inférieure de l'arbre de commande (15) présente au moins une surface de came (17,41) exerçant un effet d'écartement sur le ou les doigts de blocage (14a,14b;44) à l'encontre d'un moyen de rappel élastique.

7. Dispositif de blocage selon l'une quelconque des revendications 2 à 6, caractérisé par le fait que la tringle de commande (18) est une lame flexible montée à l'intérieur de l'élément de châssis transversal, une déformation de ladite lame au voisinage de sa partie central provoquant un déplacement simultané de ses deux extrémités qui agissent sur les arbres de commande respectifs (15) des deux blocs-roues.

8. Dispositif de blocage de roues selon les revendications 6 ou 7, caractérisé par le fait que, pour une action de blocage, les arbres de commande (15) peuvent être déplacés vers le haut, leur surface de came étant en forme de rampe inclinée, capable d'écarter les extrémités de deux branches élastiques (13a,13b) portant les doigts de blocage (14a,14b).

9. Dispositif de blocage de roues selon l'une quelconque des revendications précédentes, caractérisé par le fait que chaque bloc-roue peut pivoter librement autour de l'axe du manchon vertical de liaison.

10. Dispositif de blocage de roues selon la revendication 9, caractérisé par le fait que le manchon vertical de liaison présente, dans sa partie supérieure, au moins une encoche (30) capable de coopérer avec une pièce de blocage en rotation (32,33) dont le déplacement est provoqué par une deuxième tringle de commande (31).

# FIG.1

# FIG.2

FIG.3

## FIG.4

## FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2197042 (ANDREWS MAC-LAREN) * page 1, ligne 77 - page 2, ligne 19; figures 1-4 * | 1 | B62B9/08 |
| A | FR-A-2548608 (KASSAI KABUSHAIKI KAISHA) * page 1, ligne 3 - page 6, ligne 11; figures 1-15 * | 1 | |
| A,D | EP-A-0064368 (KIRK-OYSON DESIGNS) * page 4, ligne 3 - page 8, ligne 14; figures 1-7 * | 1 | |
| A | DE-A-2351435 (MÜLLER) * pages 1 - 5; figures 1-19 * | 1 | |

DOMAINES TECHNIQUES
RECHERCHES (Int. Cl.5)

B62B

Le présent rapport a été établi pour toutes les revendications

| Lieu de la recherche | Date d'achèvement de la recherche | Examinateur |
|---|---|---|
| LA HAYE | 20 DECEMBRE 1989 | VANNESTE M.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P0402)